# EUROPEAN PATENT APPLICATION

(11) **EP 4 216 606 A1**
(43) Date of publication of application: **26.07.2023**
(21) Application number: 22196203.8
(22) Date of filing: 16.09.2022
(51) Int. Cl.: H04W 36/00, H04W 76/14, H04W 12/06, H04W 88/04

(54) **METHOD AND APPARATUS FOR UPDATING USER EQUIPMENT AUTHENTICATION IN WIRELESS COMMUNICATION SYSTEM**

(30) Priority: 24.01.2022 KR 20220010211
(71) Applicant: LG Electronics, Inc., Yeongdeungpo-gu Seoul 07336 (KR)
(72) Inventor: KIM, Dongjoo, 06772 Seoul (KR); KIM, Anbin, 06772 Seoul (KR)
(74) Representative: Maikowski & Ninnemann Patentanwälte Partnerschaft mbB

(57) **Abstract**

Disclosed herein is a method for updating authentication of a user equipment (UE) in a wireless communication system, including: receiving, by a relay UE, a first authentication request message for authenticating a first remote UE from a network, wherein the first authentication request message includes an ID of the first remote UE and authentication request information; acquiring authentication response information by performing an authentication-related procedure with the first remote UE; and transmitting a first authentication response message including the authentication response information and the ID of the first remote UE to the network, and authentication for the first remote UE may be performed based on the authentication response information.

## Description

### Technical Field

The present disclosure relates to a wireless communication system, that is, to a method for updating authentication of a user equipment. More particularly, the present disclosure relates to a method for operating based on whether or not secondary authentication is successful for a remote user equipment (UE) that performs communication with a core network based on UE-network relay.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.
In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure may provide a method and apparatus for updating authentication of a user equipment in a wireless communication system.

The present disclosure may provide a method and apparatus for updating authentication for a remote user equipment (UE) that performs communication with a core network through a relay UE based on UE-network relay in a wireless communication system.

The present disclosure may provide a method and apparatus for determining whether or not to maintain a packet data unit (PDU) session of a relay UE, in case of updating secondary authentication for a remote UE in a wireless communication system, by considering whether or not the secondary authentication is successfully updated.

The present disclosure may provide a method and apparatus for determining whether or not to maintain a packet data unit (PDU) session of a relay UE, in case of updating secondary authentication for a remote UE in a wireless communication system, based on whether or not another remote UE uses the PDU session when the updating of the secondary authentication fails.

The technical objects to be achieved in the present disclosure are not limited to the above-mentioned technical objects, and other technical objects that are not mentioned may be considered by those skilled in the art through the embodiments described below.

### Technical Solution

As an example of the present disclosure, a method for updating authentication of a user equipment in a wireless communication system may include: receiving, by a relay UE, a first authentication request message for authenticating a first remote UE from a network, wherein the first authentication request message includes an ID of the first remote UE and authentication request information; acquiring authentication response information by performing an authentication-related procedure with the first remote UE; and transmitting a first authentication response message including the authentication response information and the ID of the first remote UE to the network, and authentication for the first remote UE may be performed based on the authentication response information.

In addition, as an example of the present disclosure, a relay user equipment (UE) operating in a wireless communication system may include at least one transceiver, at least one processor, and at least one memory coupled with the at least one processor in an operable manner and configured, when operated, to store instructions for the at least one processor to perform a specific operation, and the specific operation may be configured to control a transceiver to receive a first authentication request message for authenticating a first remote UE from a network, to acquire authentication response information by performing an authentication-related procedure with the first remote UE, and to control a transceiver to transmit a first authentication response message including the authentication response information and the ID of the first remote UE to the network, wherein the first authentication request message may include an ID of the first remote UE and authentication request information and authentication for the first remote UE may be performed based on the authentication response information.

In addition, as an example of the present disclosure, a method for updating authentication of a user equipment (UE) in a network of a wireless communication system may include: transmitting a first authentication request message for authenticating a first remote UE to a relay UE, wherein the first authentication request message includes an ID of the first remote UE and authentication request information; receiving, from the relay UE, a first authentication response message including authentication response information and the ID of the first remote UE; delivering the authentication response information to an external data network; and receiving authentication result information associated with the first remote UE from the external data network.

In addition, as an example of the present disclosure, a network operating in a wireless communication system may include at least one transceiver, at least one processor, and at least one memory coupled with the at least one processor in an operable manner and configured, when operated, to store instructions for the at least one processor to perform a specific operation, and the specific operation may be configured to control a transceiver to transmit a first authentication request message for authenticating a first remote UE to a relay UE, wherein the first authentication request message may include an ID of the first remote UE and authentication request information, to control a transceiver to receive a first authentication response message, which includes authentication response information and the ID of the first remote UE, from the relay UE, to control a transceiver to deliver the authentication response information to an external data network, and to control a transceiver to receive authentication result information for the first remote UE from the external data network.

### Advantageous Effects

The present disclosure may provide a method for updating authentication of a UE in a wireless communication system.

The present disclosure has an effect of providing a method for updating authentication for a remote UE that performs communication with a core network through a relay UE based on UE-network relay in a wireless communication system.

The present disclosure has an effect of providing a method and apparatus for determining whether or not to maintain a packet data unit (PDU) session of a relay UE, in case of updating secondary authentication for a remote UE in a wireless communication system, by considering whether or not the secondary authentication is successfully updated.

The present disclosure has an effect of providing a method and apparatus for determining whether or not to maintain a packet data unit (PDU) session of a relay UE, in case of updating secondary authentication for a remote UE in a wireless communication system, based on whether or not another remote UE uses the PDU session when the updating of the secondary authentication fails.

The technical objects to be achieved in the present disclosure are not limited to the above-mentioned technical objects, and other technical objects that are not mentioned may be considered by those skilled in the art through the embodiments described below.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when performing a configuration described in the present disclosure, may also be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view illustrating various reference points.
FIG. 2 is a view illustrating an example of a network structure of an evolved universal terrestrial radio access network (E-UTRAN) to which the present disclosure is applicable.
FIG. 3 is a view illustrating a general E-URTAN and an example of an architecture of an evolved packet core (EPC).
FIG. 4 is a view illustrating an example of a structure of a radio interface protocol in a control plane between user equipment (UE) and evolved node B (eNB).
FIG. 5 is a view illustrating an example of a structure of a radio interface protocol in a user plane between UE and eNB
FIG. 6 is a view illustrating an example of an architecture of a general new radio (NR)-radio access network (RAN).
FIG. 7 is a view illustrating an example of functional separation of a general NG-RAN and a 5th generation core (5GC).
FIG. 8 is a view illustrating an example of a general architecture of a 5th generation (5G) system.
FIG. 9 is a view illustrating an example of a wireless device applicable to the present disclosure.
FIG. 10 is a view illustrating a method for performing ProSe direct discovery based on a model A that is applied in the present disclosure.
FIG. 11 is a view illustrating a method for performing ProSe direct discovery based on a model B that is applied in the present disclosure.
FIG. 12 is a view illustrating a method for performing ProSe communication based on UE-network relay that is applied to the present disclosure.
FIG. 13 is a view illustrating a method for performing secondary authentication after setting PC5 link according to an embodiment of the present disclosure.
FIG. 14 is a view illustrating a case in which there is one remote UE in a PDU session of a relay UE, when re-authentication for secondary authentication of the remote UE fails according to an embodiment of the present disclosure.
FIG. 15 is a view illustrating a case in which a plurality of remote UEs are present in a PDU session of a relay UE, when re-authentication for secondary authentication of a remote UE fails, according to an embodiment of the present disclosure.
FIG. 16 is a view illustrating a method for performing re-authentication for secondary authentication of a remote UE according to an embodiment of the present disclosure.
FIG. 17 is a view illustrating a method for maintaining a PDU session in case re-authentication for secondary authentication of a first UE fails, according to an embodiment of the present disclosure.
FIG. 18 is a view illustrating a method for maintaining a PDU session in case re-authentication for secondary authentication of a first UE fails.
FIG. 19 is a flowchart illustrating a method for revoking secondary authentication according to an embodiment of the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

### Overview of 3GPP System

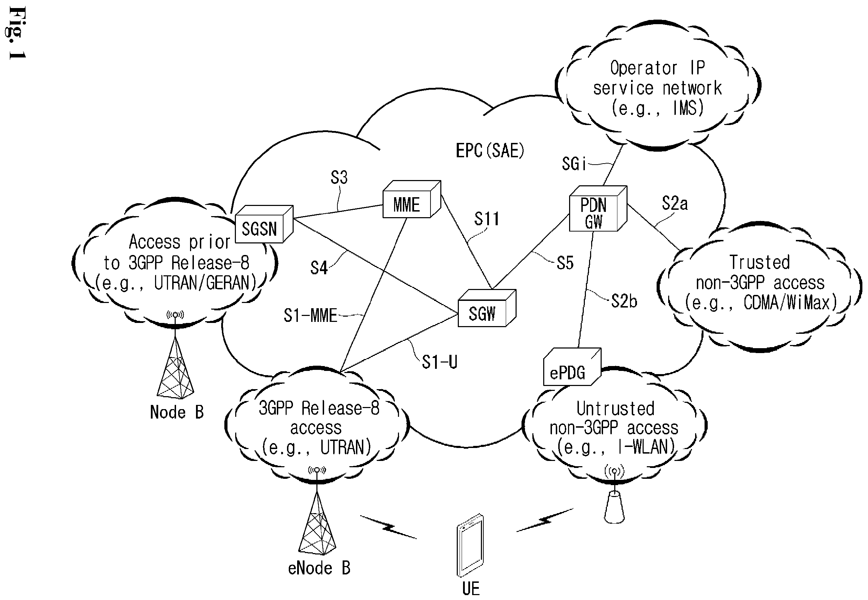

FIG. 1 illustrates various reference points.

An example of the network structure of FIG. 1 discloses an LTE/EPS-based network structure, and may operate with reference to matters described in standard documents published before this document. In the network structure of FIG. 1 , at least one of SGW, PDN GW, MME, SGSN, and ePDG entities may operate with reference to matters described in standard documents published before this document. In addition, S1-MME, S1-U, S2a, S2b, S3, S4, S5, S11, and SGi may exist as interfaces between each entity, which are described in the standard document published before this document. can do. In addition, other entities and interfaces may be configured with reference to matters described in standard documents published before this document described above, and are not limited to specific forms.

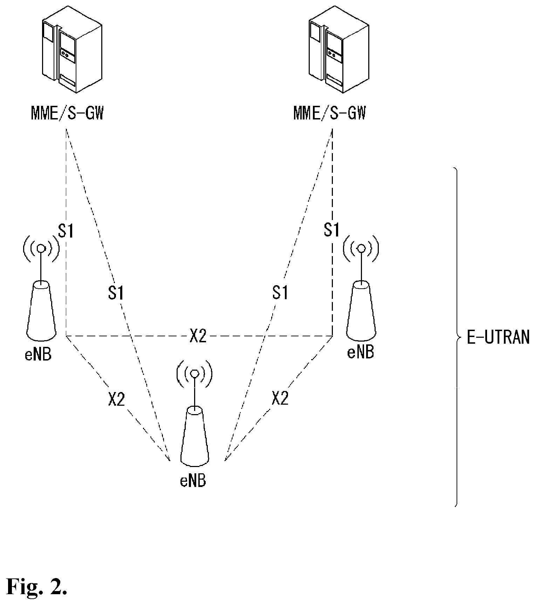

FIG. 2 illustrates an example of a network structure of an evolved universal terrestrial radio access network (E-UTRAN) to which the present disclosure is applicable.

An E-UTRAN system is an evolved version of the existing UTRAN system and may be, for example, 3GPP LTE/LTE-A system. Communication networks are widely deployed to provide various communication services such as voice (e.g., voice over Internet protocol (VoIP)) through IMS and packet data.

Referring to FIG. 2, an E-UMTS network includes an E-UTRAN, an EPC, and one or more UEs. The E-UTRAN consists of eNBs that provide control plane and user plane protocols to the UE, and the eNBs are interconnected with each other by means of the X2 interface, and reference may be made to matters described in standard documents published before this document.

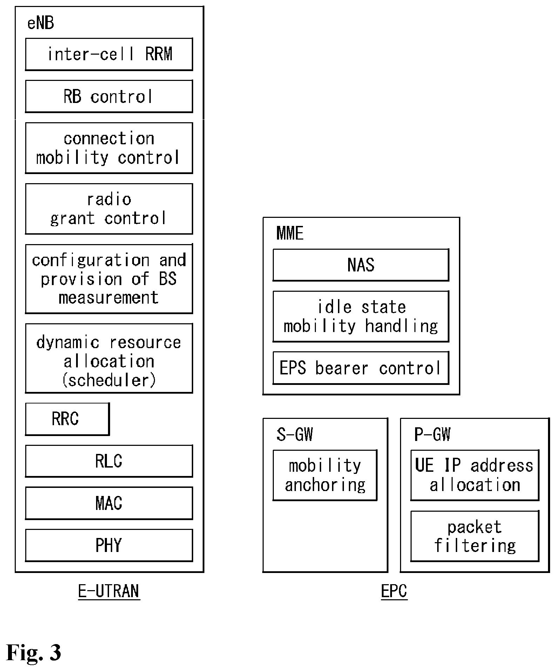

FIG. 3 is a view illustrating a general E-URTAN and an example of an architecture of an evolved packet core (EPC).

As illustrated in FIG. 3, the eNB can perform functions such as routing to gateway while radio resource control (RRC) connection is activated, scheduling and transmission of paging messages, scheduling and transmission of a broadcast channel (BCH), dynamic allocation of resources in uplink and downlink to the UE, configuration and provision for the measurement of the eNB, radio bearer control, radio admission control, and connection mobility control. The eNB can perform functions such as paging situation in the EPC, management of an LTE IDLE state, ciphering of a user plane, SAE bearer control, and ciphering and integrity protection of NAS signaling.

Annex J of 3GPP TR 23.799 shows various architectures combining 5G and 4G. And 3GPP TS 23.501 shows an architecture using NR and NGC.

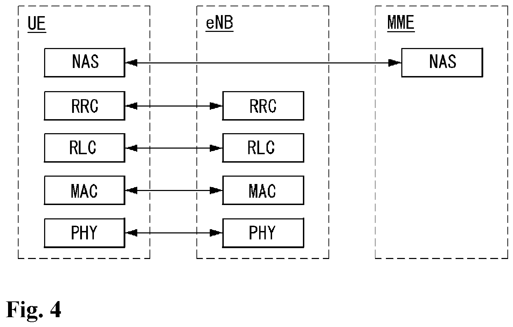

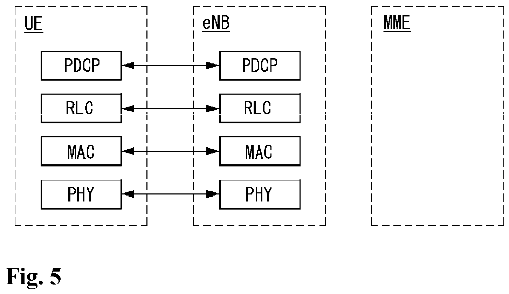

FIG. 4 is a view illustrating an example of a structure of a radio interface protocol in a control plane between user equipment (UE) and evolved node B (eNB), and FIG. 5 is view illustrating an example of a structure of a radio interface protocol in a user plane between UE and eNB.

The radio interface protocol is based on 3GPP radio access network standard. The radio interface protocol horizontally consists of a physical layer, a data link layer, and a network layer, and is vertically divided into a user plane for data information transmission and a control plane for control signaling delivery.

The protocol layers may be divided into L1 (first layer), L2 (second layer), and L3 (third layer) based upon three lower layers of an open system interconnection (OSI) standard model that is well known in the art of communication systems, and it is possible to refer to the matters described in the standard document published before this document described above.

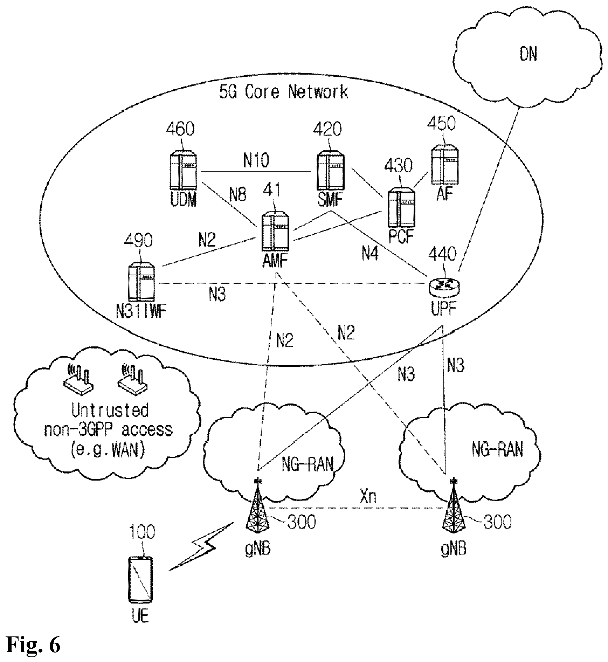

FIG. 6 is a view illustrating an example of a wireless communication system that is applied to the present disclosure.

5GC (5G Core) may include various components, part of which are shown in FIG. 6, including an access and mobility management function (AMF) 410, a session management function (SMF) 420, a policy control function (PCF) 430, a Prose user plane function (UPF) 440, an application function (AF) 450, unified data management (UDM) 460, and a non-3GPP interworking function (N3IWF) 490.

A UE 100 is connected to a data network via the UPF 440 through a next generation radio access network (NG-RAN) including the gNB 300. The UE 100 may be provided with a data service even through untrusted non-3GPP access, e.g., a wireless local area network (WLAN). In order to connect the non-3GPP access to a core network, the N3IWF 490 may be deployed.

The N3IWF 490 performs a function of managing interworking between the non-3GPP access and the 5G system. When the UE 100 is connected to non-3GPP access (e.g., WiFi referred to as IEEE 801.11), the UE 100 may be connected to the 5G system through the N3IWF 490. The N3IWF 490 performs control signaling with the AMF 410 and is connected to the UPF 440 through an N3 interface for data transmission.

The AMF 410 may manage access and mobility in the 5G system. The AMF 410 may perform a function of managing (non-access stratum) NAS security. The AMF 410 may perform a function of handling mobility in an idle state.

The UPF 440 performs a function of gateway for transmitting and receiving user data. The UPF node 440 may perform the entirety or a portion of a user plane function of a serving gateway (S-GW) and a packet data network gateway (P-GW) of 4G mobile communication.

The UPF 440 is a component that operates as a boundary point between a next generation radio access network (NG-RAN) and the core network and maintains a data path between the gNB 300 and the SMF 420. In addition, when the UE 100 moves over an area served by the gNB 300, the UPF 440 serves as a mobility anchor point. The UPF 440 may perform a function of handling a PDU. For mobility within the NG-RAN (which is defined after 3GPP Release-15), the UPF 440 may route packets. In addition, the UPF 440 may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF 440 may correspond to a termination point of a data interface toward the data network.

The PCF 430 is a node that controls an operator's policy. The AF 450 is a server for providing various services to the UE 100. The UDM 460 is a server that manages subscriber information, such as home subscriber server (HSS) of 4G mobile communication. The UDM 460 stores and manages the subscriber information in a unified data repository (UDR).

The SMF 420 may perform a function of allocating an Internet protocol (IP) address of the UE 100. In addition, the SMF 420 may control a packet data unit (PDU) session.

For convenience of explanation, hereinafter, reference numerals may be omitted for AMF 410, SMF 420, PCF 430, UPF 440, AF 450, UDM 460, N3IWF 490, gNB 300, or UE 100, which may operate with reference to contents described in standard documents released earlier than the present document.

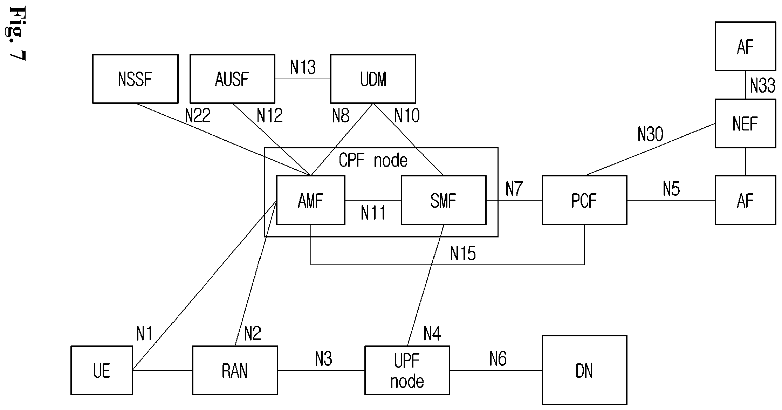

FIG. 7 is a view illustrating an example expressing a structure of a wireless communication system, which is applied to the present disclosure, from a node perspective.

Referring to FIG. 7, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 7 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

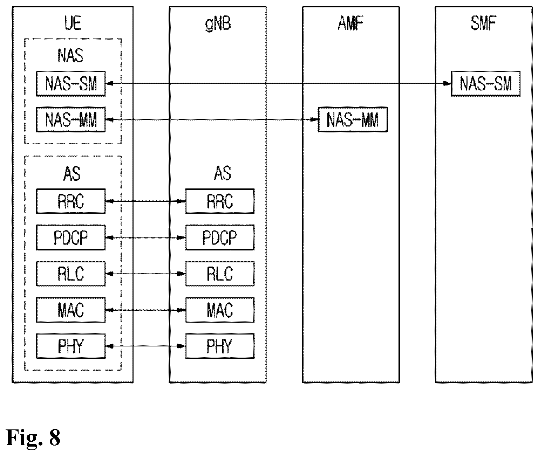

Hereinafter, the present disclosure will describe each layer of a radio protocol. FIG. 8 is a view illustrating an example of a radio interface protocol between UE and gBN.

Referring to FIG. 8, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

### Communication system applicable to the present disclosure

Although not limited thereto, various descriptions, functions, procedures, proposals, methods and/or operation flowcharts disclosed in the present disclosure are applicable to various fields requiring wireless communication/connection (e.g., 5G) between devices.

Hereinafter, it will be described in greater detail with reference to the drawings. In the following drawings/description, the same reference numerals may denote the same or corresponding hardware blocks, software blocks or functional blocks unless otherwise stated.

### Communication system applicable to the present disclosure

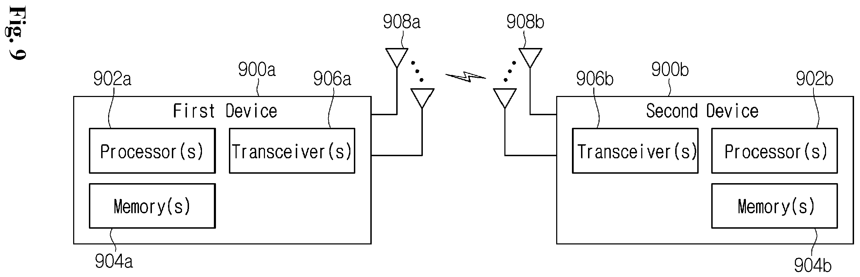

FIG. 9 is a view showing an example of a wireless device applicable to the present disclosure.

Referring to FIG. 9, a first wireless device 900a and a second wireless device 900b may transmit and receive radio signals through various radio access technologies (e.g., LTE or NR). Here, {the first wireless device 900a, the second wireless device 900b} may correspond to {the wireless device 100x, the base station 90} and/or {the wireless device 100x, the wireless device 100x}.

The first wireless device 900a may include one or more processors 902a and one or more memories 904a and may further include one or more transceivers 906a and/or one or more antennas 908a. The processor 902a may be configured to control the memory 904a and/or the transceiver 906a and to implement descriptions, functions, procedures, proposals, methods and/or operational flowcharts disclosed herein. For example, the processor 902a may process information in the memory 904a to generate first information/signal and then transmit a radio signal including the first information/signal through the transceiver 906a. In addition, the processor 902a may receive a radio signal including second information/signal through the transceiver 906a and then store information obtained from signal processing of the second information/signal in the memory 904a. The memory 904a may be coupled with the processor 902a, and store a variety of information related to operation of the processor 902a. For example, the memory 904a may store software code including instructions for performing all or some of the processes controlled by the processor 902a or performing the descriptions, functions, procedures, proposals, methods and/or operational flowcharts disclosed herein. Here, the processor 902a and the memory 904a may be part of a communication modem/circuit/chip designed to implement wireless communication technology (e.g., LTE or NR). The transceiver 906a may be coupled with the processor 902a to transmit and/or receive radio signals through one or more antennas 908a. The transceiver 906a may include a transmitter and/or a receiver. The transceiver 906a may be used interchangeably with a radio frequency (RF) unit. In the present disclosure, the wireless device may refer to a communication modem/circuit/chip.

The second wireless device 900b may include one or more processors 902b and one or more memories 904b and may further include one or more transceivers 906b and/or one or more antennas 908b. The processor 902b may be configured to control the memory 904b and/or the transceiver 906b and to implement the descriptions, functions, procedures, proposals, methods and/or operational flowcharts disclosed herein. For example, the processor 902b may process information in the memory 904b to generate third information/signal and then transmit the third information/signal through the transceiver 906b. In addition, the processor 902b may receive a radio signal including fourth information/signal through the transceiver 906b and then store information obtained from signal processing of the fourth information/signal in the memory 904b. The memory 904b may be coupled with the processor 902b to store a variety of information related to operation of the processor 902b. For example, the memory 904b may store software code including instructions for performing all or some of the processes controlled by the processor 902b or performing the descriptions, functions, procedures, proposals, methods and/or operational flowcharts disclosed herein. Herein, the processor 902b and the memory 904b may be part of a communication modem/circuit/chip designed to implement wireless communication technology (e.g., LTE or NR). The transceiver 906b may be coupled with the processor 902b to transmit and/or receive radio signals through one or more antennas 908b. The transceiver 906b may include a transmitter and/or a receiver. The transceiver 906b may be used interchangeably with a radio frequency (RF) unit. In the present disclosure, the wireless device may refer to a communication modem/circuit/chip.

In addition, the structure of a wireless device applicable to the present disclosure is not limited to FIG. 9, and may be configured in various forms. In particular, the present disclosure may be applied to a wireless device that performs an operation for transmitting and/or receiving a wireless signal, and is not limited to a specific form.

As an example, being a function supported based on a ProSe service, ProSe direct discovery may be a process for a user equipment (UE) to discover and recognize another UE adjacent to it based on NR, E-UTRA or WLAN. Herein, there may be two types of ProSe direct discovery: an open type and a restricted type. As an example, the open type may be a type of performing direct discovery without explicit permission for a UE to be discovered. On the other hand, the restricted type may be a type of performing direct discovery only based on explicit permission for a UE to be discovered.

As an example, ProSe direct discovery may be a service that is solely provided to use information on a specific application of a UE that is discovered. The UE may perform an additional operation through information that is obtained through ProSe direct discovery, and thus the service may be provided. In addition, as an example, as non-public safety UEs with a ProSe function, UEs having authority for ProSe direct discovery may perform the ProSe direct discovery function based on NR or E-UTRA in a serving PLMN Herein, as an example, in case a non-public safety UE loses NR or E-UTRA coverage, the ProSe direct discovery function may not be supported, but the present disclosure is not limited thereto.

In addition, as an example, the ProSe direct discovery may be performed based on Model A or Model B but is not limited thereto. As an example, a UE, which has the ProSe function enabled in Model A, may play any one role of an announcing UE and a monitoring UE. As an example, the announcing UE may be a UE that announces specific information available in another UE that is adjacent and of which discovery is permitted. The monitoring UE may be a UE that monitors specific information announced by the announcing UE. Herein, the announcing UE may broadcast a discovery message during a preset search interval, and the monitoring UE may operate by confirming a message among broadcast messages and then performing a process. That is, Model A may be a model in which an announcing UE delivers its presence and relevant information through broadcast and a search is performed when a neighbor monitoring UE is interested in the information.

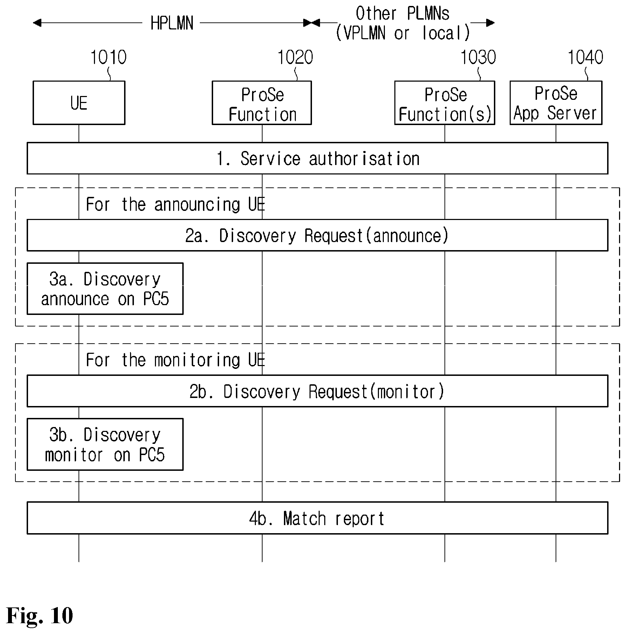

As a concrete example, FIG. 10 is a view illustrating a method for performing ProSe direct discovery based on Model A that is applied in the present disclosure. Referring to FIG. 10, a UE 1010 may perform service authentication based on ProSe functions 1020 and 1030 and a ProSe application server (ProSe App server) 1040. Next, the UE 1010, which is an announcing UE, may transmit a discovery request message to the ProSe function 1020 and then perform service authentication through the ProSe App server 1040. Next, when authentication is completed, the UE 1010 may perform announcing in a broadcast way. In addition, when the UE 1010 performs monitoring, the UE 1010 may transmit a discovery request message to a monitoring UE through the ProSe function 1020 and then perform service authentication through the ProSe App server 1040. Next, the UE 1010 may monitor an announced message. The UE 1010 may perform service matching based on announcing message monitoring and report matching information to the ProSe function 1020 and the ProSe App server 1040.

On the other hand, Model B may be a model in which ProSe direct discovery is performed in the restricted discovery type as a discoverer UE transmits a restricted discovery message to a discoveree UE. More specifically, a discoverer UE may transmit a request including specific information to be discovered to a discoveree UE. Herein, the discoveree UE may deliver, to the discoverer UE, a response message, which includes relevant information, based on the request message received from the discoverer UE. That is, in Modell B, a discoverer UE may transmit a discovery request message for specific information to a specific discoveree UE and receive a response to the request message, and thus ProSe direct discovery may be performed. As an example, as the public safety discovery is a restricted discovery, a monitoring UE of Model A and a discoverer UE of Model B, which are described above, may need authorization to perform discovery in relation to a specific service, and the ProSe direct discovery may be performed based on this.

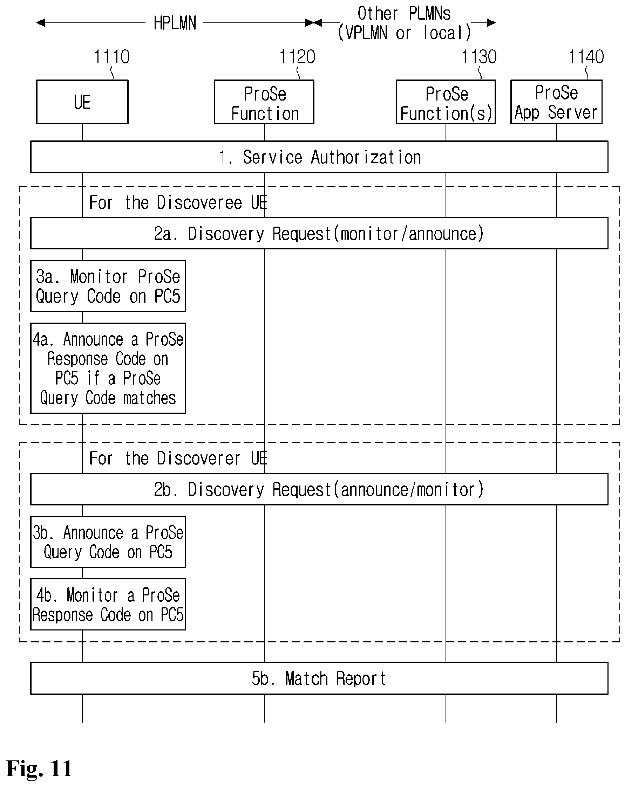

As a concrete example, FIG. 11 is a view illustrating a method for performing ProSe direct discovery based on Model B that is applied in the present disclosure. Referring to FIG. 11, a UE 1110 may perform service authentication based on ProSe functions 1120 and 1130 and a ProSe application server (ProSe App server) 1140. Next, the UE 1010, which is a discoveree UE, may transmit a discovery request message to the ProSe function 1120 and then perform service authentication through a ProSe App server 1140. Herein, the UE 1110, which is a discoveree UE, may obtain a ProSe response code and a discovery query filter. The UE 1110, which is a discoveree UE, may monitor the ProSe query code through PC5 and, when the ProSe query code is matched, announce a ProSe response code through PC5. Next, the UE 1010, which is a discoverer UE, may transmit a discovery request message to the ProSe function 1120 and then perform service authentication through the ProSe App server 1140. Herein, the UE 1110, which is a discoverer UE, may obtain a discovery response filter, which is composed of a ProSe query code and a ProSe response code, and a ProSe application mask. Next, the UE 1110, which is a discoverer UE, may announce the ProSe query code and complete discovery by monitoring a ProSe response code transmitted by a discoveree UE, thereby performing matching for a corresponding service. Next, the matching information may be reported to the ProSe function 1120 and the ProSe App server 1140.

Based on what is described above, direct communication may be performed. In addition, as an example, a core network of a new communication system (e.g., 5G) may support at least one of ProSe direct discovery, ProSe direct communication, and ProSe UE-to-network relay. Herein, UEs operating based on a ProSe function may perform authentication. In addition, as an example, in UEs operating based on a ProSe function, pre-provisioning may be performed for ProSe direct discovery, ProSe direct communication, and ProSe UE-network relay, and the above-described service may be provided accordingly.

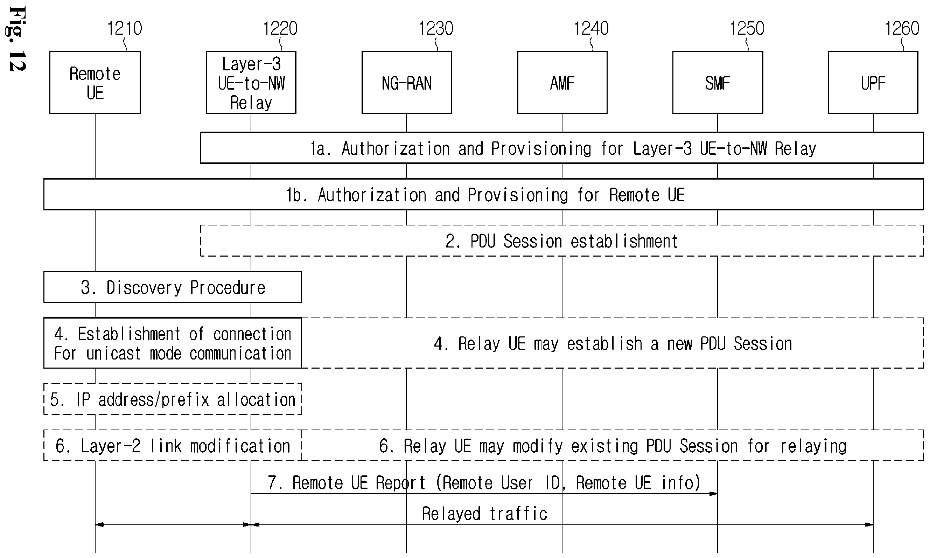

FIG. 12 is a view illustrating a method for performing ProSe communication based on UE-network relay that is applied to the present disclosure. Referring to FIG. 12, a relay UE 1220 may be registered to a network. As an example, the relay UE 1220 may be a layer-3 UE-to-network relay but will be referred to as relay UE 1220 below for convenience of explanation. Herein, after being registered to a network, the relay UE 1220 may establish a PDU session for providing a relay for a remote UE 1210 or may modify a current PDU session for providing a relay. The relay UE 1220 may use a PDU session for relay traffic for the remote UE 1210. In addition, as an example, a serving PLMN of the relay UE 1220 and a PLMN to which the remote UE 1210 is registered may be identical with or different from each other and may not be limited to a specific form.

More particularly, referring to FIG. 12, service authentication and provisioning for the relay UE 1220 may be performed. In addition, as an example, service authentication and provisioning for the remote UE 1210 may also be performed. Herein, the relay UE 1220 may establish or modify a PDU session for relay. Next, the remote UE 1210 may perform a discovery procedure for the relay UE 1220. Herein, the remote UE 1210 may recognize an accessible service based on the relay UE 1220 through the discovery procedure. Next, the remote UE 1210 and the relay UE may establish a connection for unicast mode communication. In case there is no PDU session associated with a relay service code or a new PDU session for relay is required, the relay UE 1220 may start a procedure of establishing a new PDU session before completely establishing a PC5 connection. In addition, as an example, the relay UE 1220 may determine a PDU session type for relay.

Herein, based on the PDU session type for relay, the relay UE 1220 may perform a relay function in a corresponding layer. Next, an IP address and a prefix may be allocated to the remote UE 1210 and the relay UE 1220. The remote UE 1210 may deliver a PC5 QoS rule to the relay UE 1220, and the relay UE 1220 may generate a packet filter used in a Uu interface based on the PC5 QoS rule. Next, the relay UE 1220 may perform a PDU session change and set a new QoS flow or combine traffic to an existing QoS flow. Next, the remote UE 1210 may perform uplink and downlink relay based on the relay UE 1220. Herein, in case downlink traffic is forwarded, the PC5 QoS rule may be applied to a downlink packet for PC5 QoS flow. In addition, as an example, in case uplink traffic is forwarded, a 5G QoS rule may be applied to an uplink packet for Uu QoS flow. Next, for a PDU session associated with relay, the relay UE 1220 may deliver a remote UE report including a remote UE ID and remote UE information to the SMF 1250. Herein, being an ID for identifying a remote UE, the remote UE ID may be an identifier of the remote UE that successfully performs connection to the relay UE 1220. Based on what is described above, the remote UE 1210 may perform traffic exchange with a network through the relay UE 1220. Herein, the core network may perform authentication for a UE that performs connection to the core network.

In case a remote UE is connected to a 5G core network based on a relay UE, the remote UE and the 5G core network may perform primary authentication. Next, a remote UE connected to the 5G core network may request to generate a PDU session for accessing a specific data network based on a relay UE. Herein, secondary authentication may be performed between the remote UE and the data network, which is the same as described above.

As an example, based on a predetermined condition, secondary authentication may be updated according to a determination of a 5G core network or a data network.

Herein, re-authentication for the secondary authentication may be performed based on a predetermined condition. Specifically, a 5G core network or a data network may determine whether or not to perform re-authentication for the secondary authentication. As an example, the predetermined condition described above may be a case in which credential has expired. As another example, the predetermined condition may be a case in which an authentication policy of a data network is changed. That is, re-authentication may be necessary based on a predetermined condition but may not be limited to the above-described embodiment.

In case re-authentication of secondary authentication for a UE, which is not based on ProSe relay, is performed in a previous communication system, if the re-authentication for the secondary authentication of the UE is successful, an existing PDU session may be maintained and a re-authentication result may be provided to the UE On the other hand, in case re-authentication fails for secondary authentication for a UE, which is not based on ProSe relay, a network may deliver a PDU session release command including a re-authentication failure message to the UE. That is, a PDU session may be released when re-authentication fails. However, in a ProSe relay structure, one relay UE may be connected to a plurality of remote UEs. Accordingly, as in a previous wireless communication system, in case re-authentication fails so that a PDU session of a relay UE is released, other remote UEs connected to the same relay UE may not be provided with a service. That is, as re-authentication fails based on a specific remote UE among a plurality of remote UEs connected to a single relay UE, when a PDU session of the relay UE is released, there may be a problem with providing a service of another remote UE, and a procedure for this may be necessary.

Specifically, in case a plurality of remote UEs are connected to a single relay UE in a ProSe relay structure, if a re-authentication procedure is performed by considering only one UE, a re-authentication result may be notified by distinguishing the remote UEs. Accordingly, a problem may occur to a relay service of other remote UEs connected to the relay UE. As an example, in case re-authentication is successful, the relay UE is incapable of recognizing a remote UE for which the re-authentication is successful. Accordingly, the relay UE may not deliver re-authentication information to the remote UE. In addition, as an example, in case re-authentication fails, since the relay UE is incapable of recognizing a remote UE for which the re-authentication fails, it cannot manage and release a PC5 channel between corresponding remote UEs. Hereinafter, in consideration of what is described above, in case re-authentication is performed for secondary authentication of a remote UE connected to a relay UE, a procedure of processing and distinguishing a re-authentication failure operation and a re-authentication success operation will be described.

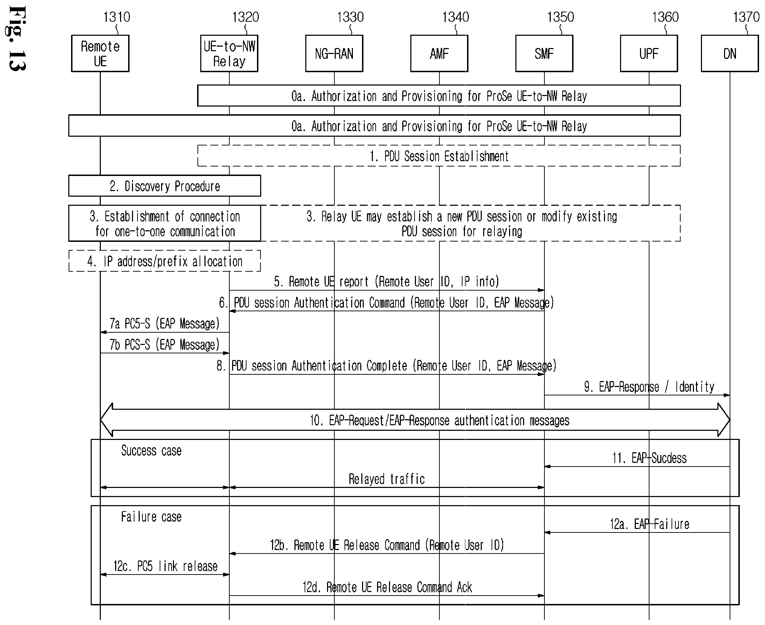

FIG. 13 is a view illustrating a method for performing secondary authentication after setting PC5 link according to an embodiment of the present disclosure.

Referring to FIG. 13, a remote UE 1310 and a relay UE 1320 may perform pre-authentication from each network so as to operate in a ProSe UE-to-network relay system. Herein, each of the remote UE 1310 and the relay UE 1320 may receive information considering a ProSe relay operation. Information considering a ProSe relay operation may include information on an authentication scheme, information necessary for direct discovery between UEs, and other types of information, but is not limited to a specific form.

Next, the relay UE 1320 may generate a PDU session in advance which is capable of providing a relay service when the remote UE 1320 is being connected. The remote UE 1310 may perform a discovery procedure for the relay UE 1320 based on information considering a ProSe relay operation. As an example, the remote UE 1310 may perform the discovery of the relay UE 1320 based on information considering a ProSe relay operation and discover the relay UE 1320 based on at least one of FIG. 10 and FIG. 11 described above.

Next, the remote UE 1310 may perform a procedure of establishing a connection for direct communication with the relay UE 1320. Herein, the remote UE 1310 may deliver an ID of the remote UE (e.g. SUCI) to the relay UE 1320. The relay UE 1320 may request AMF 1340 of the relay UE to authenticate the remote UE 1310 based on the received ID of the remote UE. Based on what is described above, a network may perform primary authentication with the remote UE 1310 through the relay UE 1320.

Next, based on a result of the primary authentication, the remote UE 1310 and the relay UE 1320 may perform a direct security mode command procedure between the remote UE 1310 and the relay UE 1320 and configure a security channel in a PC5 interface.

In case there is no PDU session satisfying a PC5 connection requirement of the remote UE 1310, the relay UE 1320 may perform a procedure for establishing a new PDU session or a procedure for modifying a PDU session. As an example, the PC5 connection requirement may be set by considering at least one of S-NSSAI, DNN, QoS, and UP security enabled states, but is not limited to the above-described embodiment.

Next, the relay UE 1320 may transmit a remote UE report message to the SMF 1350. Herein, the remote UE report message may include at least one of a remote UE ID and remote UE information. As an example, the remote UE ID may be identification information of a remote UE user, and the remote UE information may be information used for identifying a remote UE in 5GC. Specifically, when a PDU session is an IP type, remote UE information may be IP information of a remote UE. On the other hand, when a PDU session is an ethernet type, remote UE information may be an MAC address of a remote UE. The SMF 1350 may store a remote UE ID and remote UE information in a context for a PDU session that is used for relay. Next, a PDU session of a relay UE, which is to be used by the remote UE 1310, may be completely configured. The remote UE 1310 may perform secondary authentication of a data network that will be connected with the remote UE 1310 according to a network setting.

Next, the relay UE 1320 may transmit an EAP message to the remote UE 1310 through PC5 signaling and receive an EAP message from the remote UE 1310 through PC5 signaling. The relay UE 1320 may transmit a PDU session authentication completion message, which includes an ID of the remote UE and an EAP message received the remote UE, to the SMF 1350. The SMF 1350 may transmit an EAP message to DN-AAA 1360. Next, the DN-AAA 1360 and the remote UE 1310 may exchange EAP messages. Herein, when authentication is successful, the DN-AAA 1360 may transmit an EAP success message to the SMF 1350, and the remote UE 1310 may perform communication through the relay UE 1320. On the other hand, when authentication fails, the DN-AAA 1360 may transmit an EAP failure message to the SMF 1350. The SMF 1350 may transmit a remote UE release command message including a remote UE ID to the relay UE 1320. The relay UE 1320 may release a PC5 link with the remote UE and transmit an ACK response for the remote UE release command message to the SMF 1350.

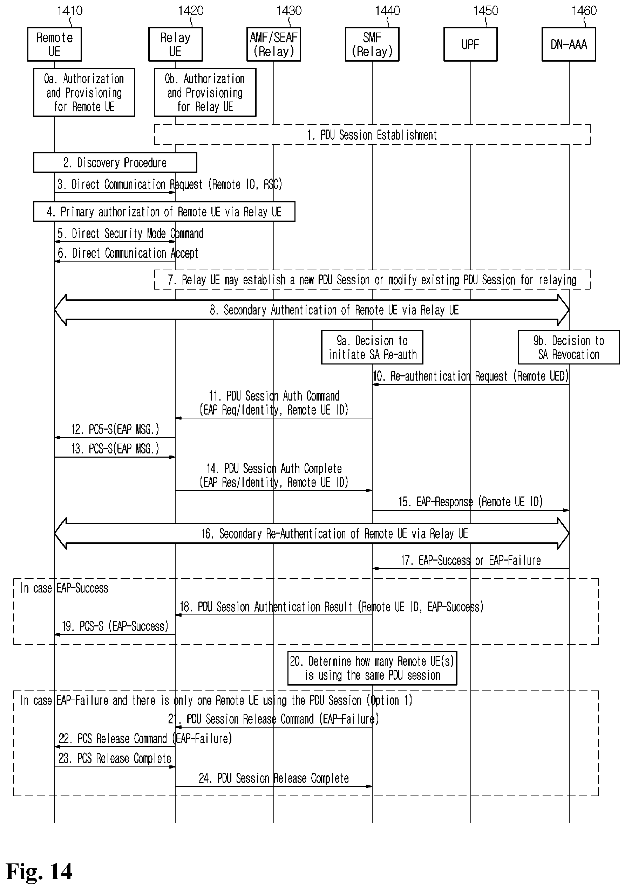

FIG. 14 is a view illustrating a case in which there is one remote UE in a PDU session of a relay UE, when re-authentication for secondary authentication of the remote UE fails according to an embodiment of the present disclosure.

Referring to FIG. 14, a remote UE 1410 and a relay UE 1420 may perform pre-authentication from each network so as to operate in a ProSe UE-to-network relay system. Herein, each of the remote UE 1410 and the relay UE 1420 may receive information considering a ProSe relay operation. As an example, information considering a ProSe relay operation may include information on an authentication scheme, information necessary for direct discovery between UEs, and other types of information, but is not limited to a specific form.

Next, the relay UE 1420 may generate a PDU session in advance which is capable of providing a relay service when the remote UE 1410 is being connected. The remote UE 1410 may perform the discovery of the relay UE 1420 based on information considering a ProSe relay operation and discover the relay UE 1420 based on at least one of FIG. 10 and FIG. 11 described above.

Next, the remote UE 1410 may transmit a connection request (direct communication request) message, which includes a remote UE ID and a relay service code (RSC), to the relay UE 1420. The relay UE 1420 may request AMF/SEAF 1430 of the relay UE to authenticate the remote UE 1410 based on the received ID of the remote UE. Thus, a network may perform primary authentication with the remote UE 1410.

Next, based on a result of the primary authentication, the remote UE 1410 and the relay UE 1420 may perform a direct security mode command procedure between the remote UE 1410 and the relay UE 1420 and configure a security channel in a PC5 interface. As a response to the direct communication request message, the relay UE 1420 may transmit a direct communication accept message to the remote UE 1410 and complete a PC5 channel setting.

Herein, the relay UE 1420 may determine PDU session parameters that are mapped with the received RSC of the remote UE. As an example, a PDU session parameter may include at least one of a PDU session type, DNN, an SSC mode, S-NSSAL, and an access type preference, but may not be limited thereto. As an example, in case a PDU session, which the relay UE 1420 generates for a relay service in advance, satisfies a PDU session parameter condition that is mapped with an RSC of the remote UE 1410, the relay UE 1420 may use an existing PDU session as it is.

On the other hand, in case a PDU session, which the relay UE 1420 generates for a relay service in advance, does not satisfy a PDU session parameter condition that is mapped with an RSC of the remote UE 1410, the relay UE 1420 may request to generate a new PDU session or request to modify an existing PDU session. Next, the relay UE 1420 may transmit a remote UE report message to the SMF 1440. Herein, the remote UE report message may include at least one of a remote UE ID and remote UE information. As an example, the remote UE ID may be identification information of a remote UE user, and the remote UE information may be information used for identifying a remote UE in 5GC. Specifically, when a PDU session is an IP type, remote UE information may be IP information of a remote UE. On the other hand, when a PDU session is an ethernet type, remote UE information may be an MAC address of a remote UE. The SMF 1440 may store a remote UE ID and remote UE information in a context for a PDU session that is used for relay. Next, a PDU session of a relay UE, which is to be used by the remote UE 1410, may be completely configured. The remote UE 1410 may perform secondary authentication of a data network that will be connected with the remote UE 1410 according to a network setting, and thus may perform communication with a data network via the relay UE 1420.

Herein, re-authentication for the secondary authentication may be performed based on a predetermined condition. Specifically, re-authentication may be performed when existing authentication needs to be updated based on the expiration of authentication. As another example, re-authentication may be performed when a policy about authentication is modified. As another example, re-authentication may be performed based on a change in the configuration of a network and a data network (DN), but this is merely one example, and the present disclosure is not limited to the above-described embodiment.

In addition, a subject determining re-authentication for secondary authentication may be different. As an example, re-authentication for secondary authentication may be determined by the SMF 1440. As another example, re-authentication for secondary authentication may be determined by the DN-AAA 1460 but is not limited to a specific embodiment. In case re-authentication for secondary authentication of a specific remote UE is determined by DN-AAA 1460, DN-AAA 1460 may transmit, to an SMF, a re-authentication request message to the effect that authentication of the remote UE is to be performed again. The message used herein may be determined according to an interface between the SMF 1440 and DN-AAA 1460 and a protocol. The re-authentication request message may include an ID of a specific remote UE capable of indicating the remote UE (e.g. Remote UE ID, GPSI, etc).

Based on what is described above, the SMF 1440 may receive a re-authentication request for secondary authentication of a specific remote UE from DN-AAA 1460. As another example, the SMF 1440 may directly determine whether or not to perform re-authentication for secondary authentication of a specific remote UE, in accordance with a setting. In case re-authentication for secondary authentication of a specific remote UE is determined, the SMF 1440 may start a re-authentication procedure through a PDU session authentication command. Herein, a PDU session authentication command message may include an EAP-request/identity message for requesting a UE ID required for starting secondary authentication and be delivered to the relay UE 1420. In addition, the PDU session authentication command message may include a remote UE ID in order to enable the relay UE 1420 to identify the remote UE 1410.

The relay UE 1420 may deliver the EAP-request/identity message to the remote UE through a PC5 channel that is mapped with the remote UE ID included in the PDU session authentication command message. Herein, the EAP-request/identity message may be delivered through a PC5 signaling (PC5-S) message.

The remote UE 1410 may receive the EAP-request/identity request through the PC5-S message, generate an EAP-response/identity message, which includes an EAP ID that can be used in secondary authentication with a corresponding data network, and deliver the message to the relay UE 1420 through the PC5-S message. The relay UE 1420 may generate and deliver a PDU session authentication complete message as a response to the PDU session authentication command message received from the SMF 1440. Herein, the PDU session authentication complete message may include the EAP-response/identity message acquired from the remote UE 1410 and the remote UE ID. The SMF 1440 may deliver an EAP-response including the remote UE ID as a response to a request of DN-AAA 1460 through an interface between the SMF 1440 and DN-AAA 1460 and a protocol. As another example, the SMF 1440 may deliver an EAP-response including the remote UE ID as a separate message to DN-AAA 1460 through an interface between the SMF 1440 and DN-AAA 1460 and a protocol.

A data network may specify a corresponding remote UE through a remote UE ID delivered from the SMF 1440 and perform secondary authentication with the remote UE. Herein, DN-AAA 1460 may deliver, to the SMF 1440, whether or not re-authentication for secondary authentication is successful. In case re-authentication for secondary authentication between DN-AAA 1460 and the remote UE 1410 is successful, the SMF 1440 may notify a re-authentication result for secondary authentication to the relay UE 1420 through a PDU session authentication result message.

However, a final target of re-authentication for secondary authentication may be the remote UE 1410. Accordingly, a PDU session authentication result message may include an ID of a remote UE. The relay UE 1420 may recognize the remote UE 1410 for re-authentication of secondary authentication based on an ID of a remote UE included in a PDU session authentication result message. The relay UE 1420 may deliver a re-authentication success message of secondary authentication to the remote UE 1410 as a PC5-S message.

On the other hand, it is possible to consider a case in which re-authentication fails for secondary authentication of the remote UE 1410. Herein, the SMF 1440 may check whether or not a PDU session of the relay UE 1420, which is used by the remote UE 1410 that is a target of re-authentication failure of secondary authentication, is shared and used by other remote UEs than the remote UE.

As a concrete example, in case the remote UE 1410 performs secondary authentication for the same DN-AAA 1460 by using a PDU session of the relay UE 1420, the SMF 1440 may store context information of the relay UE 1420 and the remote UE 1410. Accordingly, the SMF 1440 may check whether or not a PDU session of the relay UE 1420, which is used by the remote UE 1410, is shared and used by other remote UEs than the remote UE.

Herein, in case there is no other remote UE that uses a PDU session of a relay UE which is used by the remote UE 1410 that fails re-authentication of secondary authentication, the SMF 1440 may deliver a PDU session release request to the relay UE 1420 in order to release the PDU session of the relay UE 1420. Herein, the PDU session release request may include a release cause value, and the release cause value may indicate secondary authentication failure (EAP-failure). Herein, as there is no other remote UE in a same PDU session of a relay UE, a remote UE ID for distinguishing a remote UE may not be included. That is, in case the relay UE 1420 includes a release cause value indicating secondary authentication failure and receives a PDU session release request that does not include a remote UE ID, the relay UE 1420 may perform a release operation for the PDU session without separately distinguishing a remote UE.

Herein, as an example, only when a PDU session of a relay UE exists only for a relay service of a remote UE, a PDU session release request message may indicate secondary authentication failure as a release cause and not include a remote UE ID, but may not be limited thereto.

As there is only one remote UE 1410 in a same PDU session, the relay UE 1420 may not need identify another remote UE and deliver a PC5 channel release command message to the remote UE 1410. The PC5 channel release request may include a release cause, and the release cause may indicate secondary authentication failure (EAP-failure). Next, the remote UE 1410 may perform a PC5 channel release operation and deliver a release result (PC5 release complete) message to the relay UE 1420. After completely releasing a PC5 channel, the relay UE 1420 may report completion of PDU session release by transmitting a PDU session release complete message to the SMF 1440.

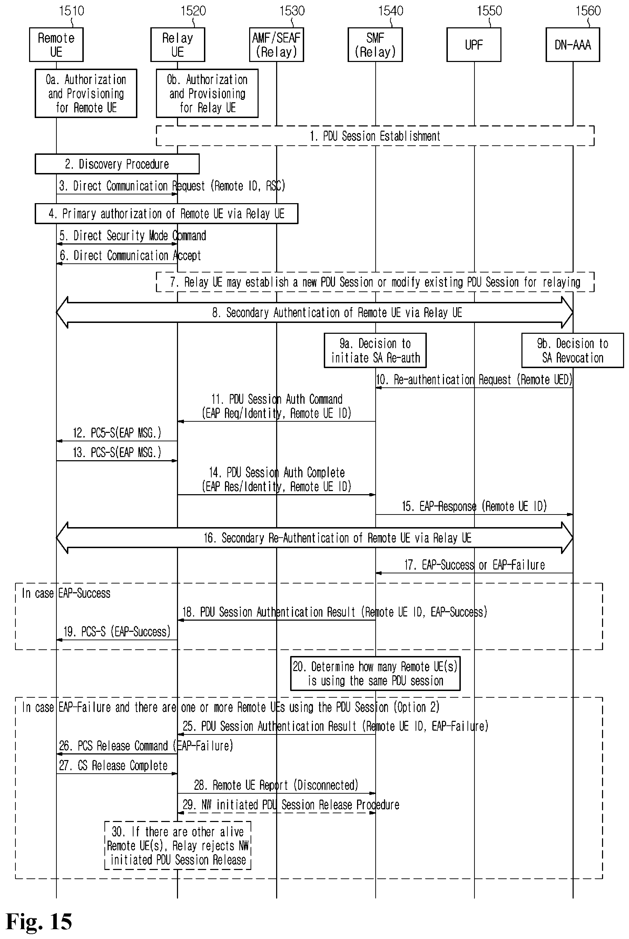

FIG. 15 is a view illustrating a case in which a plurality of remote UEs are present in a PDU session of a relay UE, when re-authentication for secondary authentication of a remote UE fails, according to an embodiment of the present disclosure.

Referring to FIG. 15, a remote UE 1510 and a relay UE 1520 may perform pre-authentication from each network so as to operate in a ProSe UE-to-network relay system. Herein, each of the remote UE 1510 and the relay UE 1520 may receive information considering a ProSe relay operation. As an example, information considering a ProSe relay operation may include information on an authentication scheme, information necessary for direct discovery between UEs, and other types of information, but is not limited to a specific form.

Next, the relay UE 1520 may generate a PDU session in advance which is capable of providing a relay service when the remote UE 1510 is being connected. As an example, the remote UE 1510 may perform the discovery of the relay UE 1520 based on information considering a ProSe relay operation and discover the relay UE 1520 based on at least one of FIG. 10 and FIG. 11 described above.

Next, the remote UE 1510 may transmit a connection request (direct communication request) message, which includes a remote UE ID and a relay service code (RSC), to the relay UE 1520. The relay UE 1520 may request AMF/SEAF 1530 of the relay UE to authenticate the remote UE 1510 based on the received ID of the remote UE. Thus, a network may perform primary authentication with the remote UE 1510.

Next, based on a result of the primary authentication, the remote UE 1510 and the relay UE 1520 may perform a direct security mode command procedure between the remote UE 1510 and the relay UE 1520 and configure a security channel in a PC5 interface. As a response to the direct communication request message, the relay UE 1520 may transmit a direct communication accept message to the remote UE 1510 and complete a PC5 channel setting.

Herein, the relay UE 1520 may determine PDU session parameters that are mapped with the received RSC of the remote UE. As an example, a PDU session parameter may include at least one of a PDU session type, DNN, an SSC mode, S-NSSAL, and an access type preference, but may not be limited thereto. As an example, in case a PDU session, which the relay UE 1520 generates for a relay service in advance, satisfies a PDU session parameter condition that is mapped with an RSC of the remote UE 1510, the relay UE 1520 may use an existing PDU session as it is.

On the other hand, in case a PDU session, which the relay UE 1520 generates for a relay service in advance, does not satisfy a PDU session parameter condition that is mapped with an RSC of the remote UE 1510, the relay UE 1520 may request to generate a new PDU session or request to modify an existing PDU session. Next, the relay UE 1520 may transmit a remote UE report message to the SMF 1540. Herein, the remote UE report message may include at least one of a remote UE ID and remote UE information. As an example, the remote UE ID may be identification information of a remote UE user, and the remote UE information may be information used for identifying a remote UE in 5GC. Specifically, when a PDU session is an IP type, remote UE information may be IP information of a remote UE. On the other hand, when a PDU session is an ethernet type, remote UE information may be an MAC address of a remote UE. The SMF 1540 may store a remote UE ID and remote UE information in a context for a PDU session that is used for relay. Next, a PDU session of a relay UE, which is to be used by the remote UE 1510, may be completely configured. The remote UE 1510 may perform secondary authentication of a data network that will be connected with the remote UE 1510 according to a network setting, and thus may perform communication with a data network via the relay UE 1520.

Herein, re-authentication for the secondary authentication may be performed based on a predetermined condition. Specifically, re-authentication may be performed when existing authentication needs to be updated based on the expiration of authentication. As another example, re-authentication may be performed when a policy about authentication is modified. As another example, re-authentication may be performed based on a change in the configuration of a network and a data network (DN), but this is merely one example, and the present disclosure is not limited to the above-described embodiment. Re-authentication for secondary authentication may be determined by the SMF 1540. As another example, re-authentication for secondary authentication may be determined by the DN-AAA 1560 but is not limited to a specific embodiment. In case re-authentication for secondary authentication of a specific remote UE is determined by DN-AAA 1560, DN-AAA 1560 may transmit, to an SMF, a re-authentication request message to the effect that authentication of the remote UE is to be performed again. The message used herein may be determined according to an interface between the SMF 1540 and DN-AAA 1560 and a protocol. The re-authentication request message may include an ID of a specific remote UE capable of indicating the remote UE (e.g. Remote UE ID, GPSI, etc).

Based on what is described above, the SMF 1540 may receive a re-authentication request for secondary authentication of a specific remote UE from DN-AAA 1560. As another example, the SMF 1540 may directly determine whether or not to perform re-authentication for secondary authentication of a specific remote UE, in accordance with a setting. In case re-authentication for secondary authentication of a specific remote UE is determined, the SMF 1540 may start a re-authentication procedure through a PDU session authentication command. Herein, a PDU session authentication command message may include an EAP-request/identity message for requesting a UE ID required for starting secondary authentication and be delivered to the relay UE 1520. In addition, the PDU session authentication command message may include a remote UE ID in order to enable the relay UE 1520 to identify the remote UE 1510.

The relay UE 1520 may deliver the EAP-request/identity message to the remote UE through a PC5 channel that is mapped with the remote UE ID included in the PDU session authentication command message. Herein, the EAP-request/identity message may be delivered through a PC5 signaling (PC5-S) message.

The remote UE 1510 may receive the EAP-request/identity request through the PC5-S message, generate an EAP-response/identity message, which includes an EAP ID that can be used in secondary authentication with a corresponding data network, and deliver the message to the relay UE 1520 through the PC5-S message. The relay UE 1520 may generate and deliver a PDU session authentication complete message as a response to the PDU session authentication command message received from the SMF 1540. Herein, the PDU session authentication complete message may include the EAP-response/identity message acquired from the remote UE 1510 and the remote UE ID. The SMF 1540 may deliver an EAP-response including the remote UE ID as a response to a request of DN-AAA 1560 through an interface between the SMF 1540 and DN-AAA 1560 and a protocol. As another example, the SMF 1540 may deliver an EAP-response including the remote UE ID as a separate message to DN-AAA 1560 through an interface between the SMF 1540 and DN-AAA 1560 and a protocol.

A data network may specify a corresponding remote UE through a remote UE ID delivered from the SMF 1540 and perform secondary authentication with the remote UE. Herein, DN-AAA 1560 may deliver, to the SMF 1540, whether or not re-authentication for secondary authentication is successful. In case re-authentication for secondary authentication between DN-AAA 1560 and the remote UE 1510 is successful, the SMF 1540 may notify a re-authentication result for secondary authentication to the relay UE 1520 through a PDU session authentication result message. However, a final target of re-authentication for secondary authentication may be the remote UE 1510. Accordingly, a PDU session authentication result message may include an ID of a remote UE. Thus, the relay UE 1520 may recognize the remote UE 1510 for re-authentication of secondary authentication. The relay UE 1520 may deliver a message associated with re-authentication success of secondary authentication to the remote UE 1510 as a PC5-S message.

On the other hand, it is possible to consider a case in which secondary authentication of the remote UE 1510 fails. That is, the SMF 1540 may receive a secondary authentication failure (EAP-failure) message from DN-AAA 1560. In case the SMF receives a secondary authentication failure message of the remote UE 1510, the SMF 1540 may check whether or not a PDU session of the relay UE 1520, which is used by the remote UE 1510, is shared and used by other remote UEs than the remote UE.

As a concrete example, whenever the remote UE 1510 performs secondary authentication for the same DN-AAA 1560 by using a PDU session of the relay UE 1520, the SMF 1540 may store context information of the relay UE 1520 and the remote UE 1510. Accordingly, the SMF 1540 may check whether or not a PDU session of the relay UE 1520, which is used by the remote UE 1510, is shared and used by other remote UEs than the remote UE.

Herein, the SMF 1540 may deliver information on a remote UE, for which secondary authentication fails, to the relay UE 1520 through a PDU session authentication result message. However, the PDU session authentication result message may be targeted not to the relay UE 1520 but to the specific remote UE 1510. Accordingly, the PDU session authentication result message may include an ID of a remote UE (e.g. Remote UE ID) for identifying the remote UE and secondary authentication result information of the remote UE. As an example, the PDU session authentication result message may include secondary authentication failure (EAP-failure) information but is not limited thereto.

The relay UE 1520 may identify a remote UE ID based on a PDU session authentication result message received from the SMF 1540. Herein, in case the PDU session authentication result message includes an authentication failure result, the relay UE 1520 may transmit a PC5 channel release command message to the remote UE 1510 that corresponds to the delivered remote UE ID. Herein, a release cause value may indicate secondary authentication failure (EAP-failure). The remote UE 1510 may perform a PC5 channel release operation based on a request and transmit a PC5 release complete message to the relay UE 1520.

Through a remote UE report, the relay UE 1520 may indicate to the SMF 1540 that PC5 channel release with the remote UE 1510 is normally completed. Next, in case the SMF 1540 determines that there is no additional remote UE using the PDU session, the SMF 1540 may start a corresponding PDU session release operation. Herein, the SMF 1540 may request the relay UE 1520 to release the PDU session after determining that there is no other remote UE using the PDU session. The relay UE 1520 may perform a PDU session release operation based on the request of the SMF 1540.

However, as an example, in case an access request occurs from another remote UE capable of utilizing the PDU session before the relay UE 1520 performs the operation of releasing the PDU session, the relay UE 1520 may not perform the PDU session release request of the SMF 1540 but maintain and reuse the PDU session, and the present disclosure is not limited to a specific embodiment.

On the other hand, in case it is determined that another remote UE uses the PDU session, the SMF 1540 may not release but maintain the PDU session.

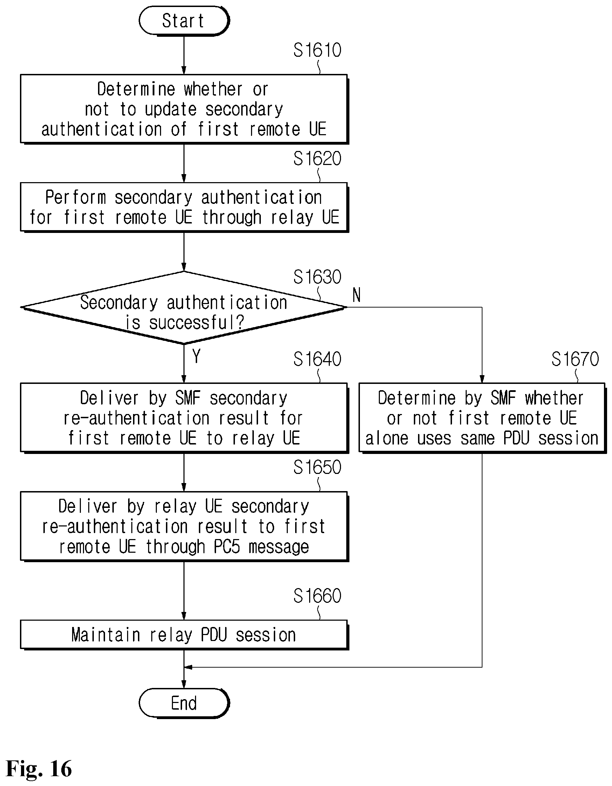

FIG. 16 is a view illustrating a method for performing re-authentication for secondary authentication of a remote UE according to an embodiment of the present disclosure. Referring to FIG. 16, re-authentication for secondary authentication of a first remote UE may be performed. As an example, an SMF may determine whether or not to perform re-authentication for secondary authentication of a first remote UE. That is, an SMF may determine whether or not to update secondary authentication of a first remote UE (S1610). Herein, determining whether or not to perform re-authentication for secondary authentication may depend on a setting or policy of the SMF but may not be limited thereto. As a concrete example, in case the first remote UE leaves a communication-permitted zone, the SMF may request re-authentication for secondary authentication. As another example, in case an access UPF for transmitting user plane data is reconfigured, the SMF may request re-authentication for secondary authentication. As another example, in case RAN fails to allocate a PDU session resource in a mobility situation, the SMF may request re-authentication for secondary authentication but may not be limited thereto.

As another example, whether or not to perform re-authentication for secondary authentication may be determined by a request of DN-AAA. In case the validity period of qualification used for secondary authentication between an external DN-AAA and a remote UE has expired, the DN-AAA may determine re-authentication for secondary authentication and request the SMF to re-authenticate the secondary authentication. In addition, as an example, a qualification operating regulation of an external DN-AAA is modified, the DN-AAA may determine re-authentication for secondary authentication and request the SMF to authenticate the secondary authentication but may not be limited thereto.

Next, the SMF may request and acquire an ID of the first remote UE necessary for secondary authentication from a relay UE. Herein, the ID of the first remote ID may be delivered to the DN-AAA. The DN-AAA may start a re-authentication procedure for secondary authentication with the first remote UE (S1620). The DN-AAA may perform the re-authentication procedure for secondary authentication and deliver authentication result information with the ID of the first remote UE to the SMF. Herein, in case the authentication result is success (S 1630), the SMF may deliver a secondary authentication success result of the first remote UE to a relay UE (S1640).Next, the relay UE may deliver a secondary re-authentication result to the first remote UE through a PC5-S message (S 1650). As an example, the relay UE may deliver the secondary re-authentication result to the remote UE based on a remote UE ID included in a message for notifying an authentication result. That is, the relay UE may deliver a secondary authentication result to a PC5 channel that is mapped with the first remote UE. Herein, the SMF may maintain a PDU session of the relay UE that is being used, so that the PDU session can be used continuously (S1660).

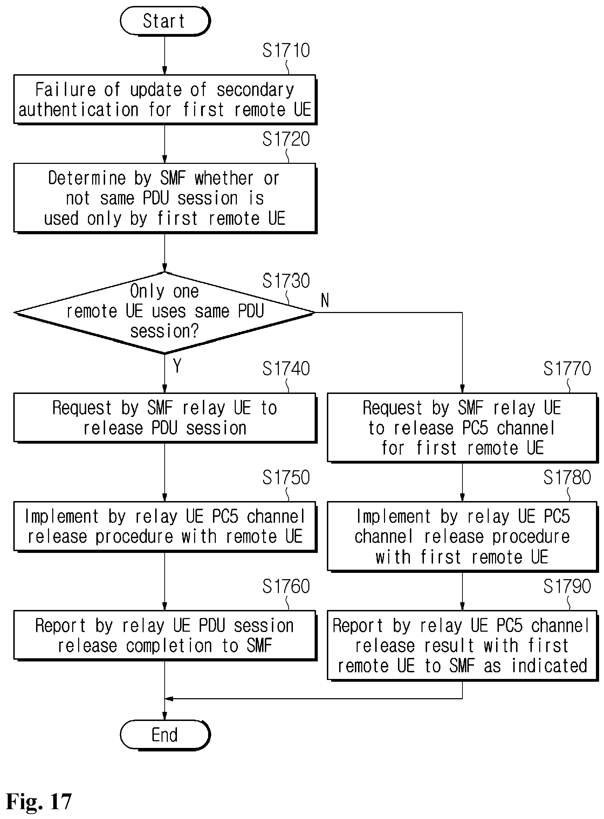

On the other hand, in case the secondary authentication fails (S1630), the SMF may check whether or not another UE uses a PDU session of the relay UE that the first remote UE uses for which the secondary authentication fails (S 1670), and a further detail will be described in FIG. 17 below.

FIG. 17 is a view illustrating a method for maintaining a PDU session in case re-authentication for secondary authentication of a first UE fails, according to an embodiment of the present disclosure.

Referring to FIG. 17, an update of secondary authentication for a first remote UE may fail (S1710). Herein, an SMF may determine whether or not the first remote UE alone uses a same PDU session (S 1720).

As an example, the SMF may store information on a remote UE and information on a relay UE, which are provided when the remote UE accesses a PDU session through the relay UE. Accordingly, the SMF may recognize a remote UE that uses a PDU session of a same relay UE.

In case there is one remote UE that uses a PDU session of a relay UE (S1730), the SMF may request a relay UE to release a PDU session that is used for a relay service (S1740). That is, in case there is no other remote UE than a first remote UE in a PDU session of a same relay UE, the SMF may transmit a PDU session release request message to the relay UE. Herein, the PDU session release request message may include a release cause value. The release cause value may indicate that re-authentication for secondary authentication of a remote UE fails. On the other hand, the PDU session release request message may not include an ID of a remote UE. Next, the relay UE may perform a PC5 channel release procedure with the first remote UE (S1750). Herein, the PC5 channel release request message may include the release cause value delivered from the SMF. In case PC5 channel release between the remote UE and the relay UE is completed, the relay UE may complete a PDU session release operation and report a PDU session release complete state to the SMF. As an example, in case the first remote UE uses a PDU session of a relay UE only for a relay service, the relay UE may receive a PDU session release request that includes a release cause value but not an ID of the remote UE, but the present disclosure may not be limited thereto.

On the other hand, in case there are one or more remote UEs using a PDU session of a relay UE (S1730), an SMF may transmit a PC5 channel release request with a first remote UE to the relay UE based on secondary authentication failure (S1770). That is, the SMF may not transmit a PDU session release request message but only request PC5 channel release from a specific remote UE for which secondary authentication fails. Herein, a message that the SMF sends to the relay UE may be a PDU session authentication result message, which may be a NAS message but is not limited thereto. A PC5 channel release request message may include an ID of a first remote UE, which can specify a first remote UE, and a release cause value. A release cause may indicate update failure for secondary authentication of a remote UE. Next, the relay UE may perform a PC5 channel release procedure with the first remote UE, which is requested from the SMF (S1780). Herein, the PC5 channel release request message may include the release cause value delivered from the SMF. In case PC5 channel release between the remote UE and the relay UE is completed, the relay UE may report a PC5 channel release result with the remote UE to the SMF through a NAS message, as indicated (S 1790).

Next, the SMF may determine whether to maintain or delete a PDU session of the relay UE for a relay service. As an example, in case there is no other remote UE using the PDU session or no further reuse is necessary, the SMF may start a PDU session release procedure. Herein, the SMF may request the relay UE to release the PDU session. The relay UE may perform the PDU session release procedure based on the request of the SMF. However, as an example, the relay UE may perform or reject a release operation by determining an additional situation. As a concrete example, in case another remote UE, which satisfies the condition for using the PDU session, makes a request for accessing the PDU session while although a release request received from the SMF is being processed, the relay UE may reject the PDU session release request of the SMF and keep using the PDU session for the relay service of the another remote UE. On the other hand, in case there is another remote UE using the same PDU session of the relay UE, the PDU session may be maintained to keep providing a relay service.

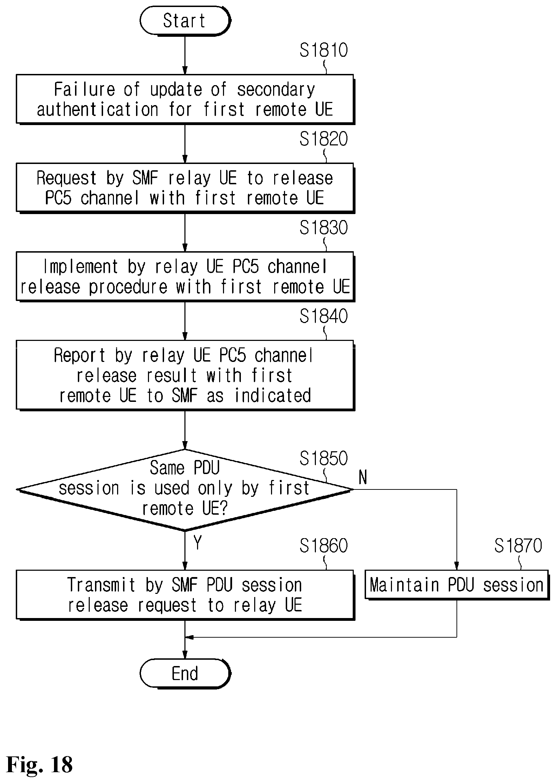

FIG. 18 is a view illustrating a method for maintaining a PDU session in case re-authentication for secondary authentication of a first UE fails.

Referring to FIG. 18, update of secondary authentication of a first remote UE may fail (S 1810). As an example, the first remote UE may be a specific remote UE among a plurality of remote UEs. The secondary authentication update for the first remote UE may be determined based on a predetermined condition, as described above.

That is, based on failure of secondary authentication update for the first remote UE, it may be determined whether or not the first remote UE alone uses a same PDU session of a relay UE. That is, the SMF may check whether or not another remote UE additionally uses the PDU session of the relay UE that the first remote UE currently uses, for which the secondary authentication is revoked. Herein, since the SMF stores information on a remote UE and information on a relay UE, which are provided when the remote UE accesses a PDU session through a relay UE, the SMF may check a remote UE that uses a same PDU session of the relay UE. Herein, the SMF may transmit two SM NAS messages to the relay UE. As an example, in FIG. 17, in case there is one remote UE using a same PDU session of a relay UE, the SMF transmitted a PDU session release request including a release cause value to the relay UE. On the other hand, in FIG. 18, the SMF may make a PC5 channel release request and a PDU session release request respectively. That is, the SMF may make a PC5 channel release request and a release request for the PDU session respectively. As an example, the SMF may transmit a PC5 channel release request message to the relay UE in order to release a PC5 channel with the first remote UE for which the update of secondary authentication fails (S1820). Herein, the message that the SMF sends to the relay UE may be a NAS message. That is, the SMF may transmit a remote UE release request message to the relay UE, and the PC5 channel release request message may be as shown in Table 1 below. As an example, a remote UE release request may include remote UE ID information for specifying a remote UE and a release cause value. As an example, the release cause value may indicate failure of secondary authentication update.

Next, the relay UE may perform a PC5 channel release procedure with the first remote UE, which is requested from the SMF (S1830). Herein, the PC5 channel release request message may include the release cause value delivered from the SMF. In case PC5 channel release between the remote UE and the relay UE is completed, the relay UE may report a PC5 channel release result with the remote UE to the SMF through a NAS message, as indicated (S1840). Next, the SMF may determine whether to maintain or release a PDU session of the relay UE for a relay service. That is, the SMF may determine whether or not any other remote UE than the first remote UE is using the same PDU session. As an example, in case there is no other remote UE using the PDU session or no further reuse is necessary (S1850), the SMF may additionally transmit a release request for the PDU session to the relay UE (S1860). Herein, the PDU session release request message may be a SM NAS message. As an example, in case the SMF requests the relay UE to release the PDU session, the relay UE may perform a release operation or reject it based on a predetermined condition. As an example, although the relay UE receives a release request from the SMF, in case another remote UE, which satisfies the condition for using the PDU session, makes a request for accessing the PDU session, the relay UE may reject the PDU session release request of the SMF and keep using the PDU session for the relay service of the another remote UE. On the other hand, in case there is another remote UE than the first remote UE in the same PDU session, the SMF may maintain the PDU session, not transmitting a message for releasing the PDU session (S 1870).

**Table 1**

| **IE I** | **Information Element** | **Type/Reference** | **Presenc e** | **Form at** | **Length** |
|---|---|---|---|---|---|
| | Extended protocol discriminator | Extended protocol discriminator | M | V | 1 |
| | PDU session ID | PDU session identity | M | V | 1 |
| | PTI | Procedure transaction identity | M | V | 1 |
| | Remote UE release message identity | Message type | M | V | 1 |
| | **Remote UE ID** | **Remote UE ID IE** | O | | |
| | **5GSM cause** | **5GSM cause** | O | TV | 2 |

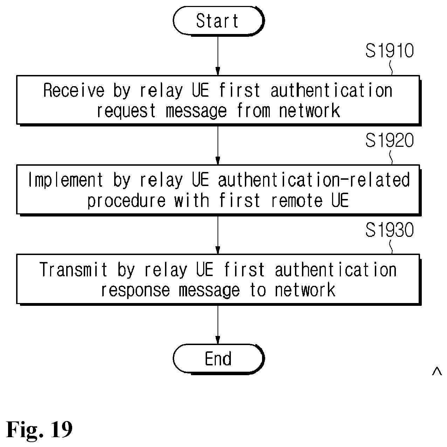

FIG. 19 is a flowchart illustrating an operation method based on secondary authentication update according to an embodiment of the present disclosure.

A relay UE may receive a first authentication request message for authenticating a first remote UE from a network (S1910). Specifically, the relay UE may receive a PDU session authentication command message from an SMF, as described above. Herein, the first authentication request message may include an ID of the first remote UE and authentication request information. As an example, the authentication request information may be EAP request/identify, as described above.

Next, the relay UE may acquire authentication response information by performing an authentication-related procedure with the first remote UE (S1920). Herein, the authentication-related procedure may be an EAP message exchange procedure and be a PC5-S message. In addition, as described above, the authentication response information may be EAP-response/identity including an EAP ID. Next, the relay UE may transmit a first authentication response message to a network (S1930). Herein, the first authentication response message may be a PDU session authentication result message, as described above. Next, based on authentication response information, authentication for the first remote UE may be performed, which is the same as described above. Herein, the network may deliver authentication response information for the first remote UE to an external data network, and whether or not authentication of the first remote UE is successful may be determined based on the external data network. As an example, the external data network may be the above-described DN-AAA but is not limited to a specific embodiment. The network may acquire information regarding whether or not authentication of the first remote UE is successful from an external data network based on authentication response information.

Herein, in case authentication for the first remote UE is successful, the relay UE may receive the ID of the first remote ID and authentication success information from the network. Next, the relay UE may deliver authentication success information to the first remote UE and maintain a PDU session of the relay UE that is used by the first remote UE.

On the other hand, in case authentication for the first remote UE fails, the relay UE may receive a PDU session release request message from the network and perform a PC5 channel release procedure with the first remote UE based on the PDU session release request message. Next, the relay UE may release a PDU session of the relay UE and transmit a PDU session release complete report to the network. Herein, in case the first remote UE alone uses the PDU session of the relay UE, the relay UE may receive the PDU session release request message from the network, as described above. The PDU session release request message may include a release cause value indicating authentication failure, and the release cause value may be delivered from the relay UE to a remote UE while a PC5 channel release procedure is performed with the first remote UE.

As another example, in case authentication for a first remote UE fails, a relay UE may receive an authentication result message from a network. Herein, the authentication result message may include an ID of the first remote UE and a release cause value indicating the authentication failure. Herein, in case a PDU session of a relay UE is used by other remote UEs than the first remote UE, the relay UE may receive the authentication result message from the network. The relay UE may perform a PC5 release procedure with the first remote UE based on the authentication result message and transmit a first remote UE report to the network after the PC5 release procedure of the first remote UE is completed. Herein, in case a PDU session of a relay UE is unnecessary based on the first remote UE report, the network may perform the PDU session release procedure with the relay UE. In case the relay UE receives the PDU session release request message from the network based on the PDU session release procedure, the relay UE may release a PDU session of the relay UE and transmit a PDU session release response message to the network.

However, in case the relay UE receives the PDU session release request message, it may be determined whether or not to maintain a PDU session of the relay UE, and it may be determined that the PDU session of the relay UE needs to be maintained. Herein, the relay UE may not release but maintain the PDU session of the relay UE and reject a network request.

As the examples of the proposal method described above may also be included in one of the implementation methods of the present disclosure, it is an obvious fact that they may be considered as a type of proposal methods. In addition, the proposal methods described above may be performed individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered illustrative. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

## Claims

1. A method for updating authentication of a user equipment (UE) in a wireless communication system, the method comprising:
receiving, by a relay UE, a first authentication request message for authenticating a first remote UE from a network, wherein the first authentication request message includes an ID of the first remote UE and authentication request information;
acquiring authentication response information by performing an authentication-related procedure with the first remote UE; and
transmitting a first authentication response message including the authentication response information and the ID of the first remote UE to the network,
wherein authentication for the first remote UE is performed based on the authentication response information.

2. The method of claim 1, wherein the network delivers the authentication response information for the first remote UE to an external data network, and whether or not authentication of the first remote UE is successful is determined based on the external data network.

3. The method of claim 2, wherein the network acquires information regarding whether the authentication of the first remote UE is successful from the external data network based on the authentication response information.

4. The method of claim 1, wherein, based on the authentication for the first remote UE being successful, the relay UE receives the ID of the first remote ID and authentication success information from the network, delivers the authentication success information to the first remote UE, and maintains a packet data unit (PDU) session of the relay UE that is used by the first remote UE.

5. The method of claim 1, wherein, based on the authentication for the first remote UE being failure, the relay UE receives a PDU session release request message from the network, performs a PC5 channel release procedure with the first remote UE based on the PDU session release request message, releases a PDU session of the relay UE, and transmits a PDU session release complete report to the network.

6. The method of claim 5, wherein, only based on the first remote UE alone using the PDU session of the relay UE, the relay UE receives the PDU session release request message from the network.

7. The method of claim 5, wherein the PDU session release request message includes a release cause value indicating authentication failure, and
wherein the release cause value is delivered from the relay UE to the first remote UE, while the PC5 channel release procedure with the first remote UE is being performed.

8. The method of claim 1, wherein, based on the authentication for the first remote UE being failure, the relay UE receives an authentication result message from the network, and
wherein the authentication result message includes the ID of the first remote UE and a release cause value indicating authentication failure.

9. The method of claim 8, wherein, based on a PDU session of a relay UE being used by other remote UEs than the first remote UE, the relay UE receives the authentication result message from the network.

10. The method of claim 9, wherein the relay UE performs a PC5 release procedure with the first remote UE based on the authentication result message and transmits a first remote UE report to the network after completing the PC5 release procedure of the first remote UE.

11. The method of claim 10, wherein, when a PDU session of the relay UE is not necessary based on the first remote UE report, the network performs a PDU session release procedure with the relay UE.

12. The method of claim 11, wherein, based on the relay UE receiving a PDU session release request message from the network based on the PDU session release procedure, the relay UE releases a PDU session of the relay UE and transmits a PDU session release response message to the network.

13. A relay user equipment (UE) operating in a wireless communication system, the relay UE comprising:
at least one transceiver;
at least one processor; and
at least one memory coupled with the at least one processor in an operable manner and configured, when operated, to store instructions for the at least one processor to perform a specific operation,
wherein the specific operation is configured to:
control the transceiver to receive a first authentication request message for authenticating a first remote UE from a network, wherein the first authentication request message includes an ID of the first remote UE and authentication request information,
acquire authentication response information by performing an authentication-related procedure with the first remote UE, and
control the transceiver to transmit a first authentication response message, which includes the authentication response information and the ID of the first remote UE, to the network,
wherein authentication for the first remote UE is performed based on the authentication response information.

14. A method for updating authentication of a user equipment (UE) in a network of a wireless communication system, the method comprising:
transmitting a first authentication request message for authenticating a first remote UE to a relay UE, wherein the first authentication request message includes an ID of the first remote UE and authentication request information;
receiving, from the relay UE, a first authentication response message including authentication response information and the ID of the first remote UE;
delivering the authentication response information to an external data network; and
receiving authentication result information associated with the first remote UE from the external data network.

15. A network operating in a wireless communication system, the network comprising:
at least one transceiver;
at least one processor; and
at least one memory coupled with the at least one processor in an operable manner and configured, when operated, to store instructions for the at least one processor to perform a specific operation,
wherein the specific operation is configured to:
control the transceiver to transmit a first authentication request message for authenticating a first remote UE to a relay UE, wherein the first authentication request message includes an ID of the first remote UE and authentication request information,
control the transceiver to receive a first authentication response message, which includes authentication response information and the ID of the first remote UE, from the relay UE,
control the transceiver to deliver the authentication response information to an external data network, and
control the transceiver to receive authentication result information for the first remote UE from the external data network.
